(19) Europäisches Patentamt
European Patent Office
Office européen des brevets

(11) EP 3 588 638 A1

(12) # EUROPEAN PATENT APPLICATION

published in accordance with Art. 153(4) EPC

(43) Date of publication:
**01.01.2020 Bulletin 2020/01**

(21) Application number: **18758204.4**

(22) Date of filing: **27.02.2018**

(51) Int Cl.:
***H01M 4/62*** *(2006.01)* ***H01M 4/13*** *(2010.01)*
***H01M 4/139*** *(2010.01)* ***H01M 4/525*** *(2010.01)*

(86) International application number:
**PCT/JP2018/007323**

(87) International publication number:
**WO 2018/155714 (30.08.2018 Gazette 2018/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **27.02.2017 PCT/JP2017/007558**

(71) Applicant: **Hitachi Chemical Company, Ltd.**
**Chiyoda-ku**
**Tokyo 100-6606 (JP)**

(72) Inventors:
- **KUZUOKA, Hiroki**
  **Tokyo 100-6606 (JP)**
- **SUZUKI, Kenji**
  **Tokyo 100-6606 (JP)**
- **NAGAI, Shunsuke**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **COMPOSITE RESIN FOR ENERGY DEVICE ELECTRODE, COMPOSITION FOR FORMING ENERGY DEVICE ELECTRODE, POSITIVE ELECTRODE FOR ENERGY DEVICE, AND ENERGY DEVICE**

(57) A composite resin for an energy device electrode includes a resin comprising a structural unit derived from a nitrile group-containing monomer; and a fluorocarbon resin.

EP 3 588 638 A1

## Description

### Technical Field

The present invention relates to a composite resin for an energy device electrode, a composition for forming an energy device electrode, a positive electrode for an energy device, and an energy device.

### Background Art

Lithium ion secondary batteries, which are non-aqueous electrolyte energy devices having high energy density, are widely used as power sources of portable information terminals such as laptop computers, mobile phones, and Personal Digital Assistants (PDAs).

In such a lithium ion secondary battery, a carbon material having a multilayer structure capable of intercalation (formation of lithium intercalation compound) and release of lithium ions is mainly used as an active material of a negative electrode. As an active material of a positive electrode, lithium-containing metal complex oxide is mainly used. An electrode of a lithium ion secondary battery is prepared by applying a slurry prepared by kneading such an active material, a binder resin, a solvent (*N*-methyl-2-pyrrolidone, water, or the like) and the like on one side or both sides of metal foil that is a current collector with a transfer roll or the like, forming a mixture layer by drying and removing the solvent, and compression molding with a roll press machine or the like.

Examples of lithium-containing metal composite oxides that are often used include lithium cobaltate ($LiCoO_2$), lithium manganate ($LiMn_2O_4$), Lithium Nickel Manganese Cobalt Oxide ($LiNi_{1/3}Mn_{1/3}Co_{1/3}O_2$), and lithium iron phosphate ($LiFePO_4$), and these oxides may be used singly, or in combination of two or more kinds thereof depending on the purpose.

As a binder resin, polyvinylidene fluoride (hereinafter, referred to as PVDF) is often used from the viewpoint of electrochemical stability, resistance to dissolution in an electrolytic solution, and the like.

In recent years, it has been required to further increase the energy density of a lithium ion secondary battery, and a positive electrode active material having a large capacity density has been proposed. As such an active material, lithium nickel manganese cobaltate, lithium nickel cobalt aluminate, and the like in which the ratio of nickel is increased have been proposed (see, for example, Patent Document 1).

In a lithium-containing metal composite oxide in which the ratio of nickel is increased, an alkali metal hydroxide (basic substance) such as LiOH used when producing the lithium-containing metal composite oxide may remain. On the other hand, PVDF, which is frequently used as a binder resin, is known to be altered by an elimination reaction of HF when contacted with a basic substance (see, for example, Non-Patent Document 1). Usually, a positive electrode for non-aqueous electrolyte energy devices is prepared by applying a positive electrode slurry containing a lithium-containing metal composite oxide and PVDF on a collector. However, when water is mixed in a positive electrode slurry, the positive electrode slurry becomes basic. This is considered to be because an alkali metal hydroxide such as LiOH contained in a lithium-containing metal composite oxide is eluted in a solvent containing water. Due to the basicity of a positive electrode slurry, PVDF may be altered. Due to the alteration of PVDF, the positive electrode slurry tends to gel.

Accordingly, as a method of producing a positive electrode active material capable of preventing gelation of a positive electrode slurry, a method of producing a positive electrode active material consisting a specific layered compound characterized in that when the pH of a supernatant obtained by stirring and mixing positive electrode active material powder after synthesis in pure water and then allowing to stand is measured, only a positive electrode active material whose pH falls within a specific range is selected is disclosed (see, for example, Patent document 2).

### Prior Art Documents

#### Patent Documents

Patent Document 1 Japanese Patent Application Laid-Open (JP-A) No. 2008-235147
Patent Document 2 Patent No. 4951823

#### Non-Patent Document

Non-Patent Document 1 Various analyses of electrode binder, The TRC News No.117 (Sep.2013)

SUMMARY OF INVENTION

Technical Problem

However, with the technique described in Patent Document 2, a decrease in capacity density or a decrease in cycle characteristics may occur.

The present invention has been made in view of the above circumstances, and an object thereof is to provide a composite resin for an energy device electrode suppressing gelation and sedimentation of slurry, and a composition for forming an energy device electrode, a positive electrode for an energy device and an energy device, which use the composite resin.

Solution to Problem

One aspect of the present invention relates to the following.

<1> A composite resin for an energy device electrode, the composite resin comprising: a resin comprising a structural unit derived from a nitrile group-containing monomer; and a fluorocarbon resin.

<2> The composite resin for an energy device electrode according to <1>, which is used for forming a positive electrode mixture layer comprising a positive electrode active material comprising a lithium-containing metal composite oxide comprising lithium and nickel and having a ratio of nickel to metal, excluding lithium, of 50% by mole or more.

<3> The composite resin for an energy device electrode according to <2>, wherein the lithium-containing metal composite oxide comprises a compound represented by the following Formula (I).

$$Li_aNi_bCo_cM_dO_{2+e} \qquad \text{Formula (I)}$$

In Formula (I), M is at least one selected from the group consisting of Al, Mn, Mg and Ca, a, b, c, d, and e satisfy $0.2 \leq a \leq 1.2$, $0.5 \leq b \leq 0.9$, $0.05 \leq c \leq 0.4$, $0 \leq d \leq 0.2$, and $-0.2 \leq e \leq 0.2$, respectively, and $b + c + d = 1$.

<4> The composite resin for an energy device electrode according to any one of <1> to <3>, wherein the resin comprising a structural unit derived from a nitrile group-containing monomer further comprises a structural unit derived from a monomer represented by the following Formula (II).

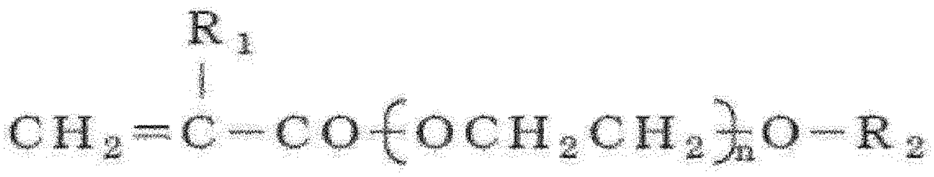

Formula (II)

In Formula (II), $R_1$ represents a hydrogen atom or a methyl group, $R_2$ represents a hydrogen atom or a monovalent hydrocarbon group, and n represents an integer from 1 to 50.

<5> The composite resin for an energy device electrode according to <4>, wherein a ratio of the structural unit derived from a monomer represented by Formula (II) with respect to 1 mole of the structural unit derived from a nitrile group-containing monomer in the resin comprising a structural unit derived from a nitrile group-containing monomer is from 0.001 moles to 0.2 moles.

<6> The composite resin for an energy device electrode according to any one of <1> to <5>, wherein the resin comprising the structural unit derived from a nitrile group-containing monomer further comprises a structural unit derived from a monomer represented by the following Formula (III).

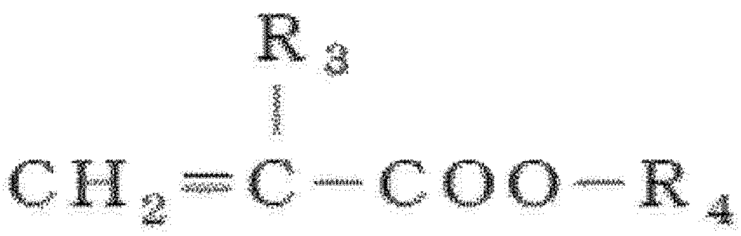

Formula (III)

In Formula (III), $R_3$ represents a hydrogen atom or a methyl group, and $R_4$ represents an alkyl group having from 4 to 30 carbon atoms.

<7> The composite resin for an energy device electrode according to <6>, wherein a ratio of the structural unit derived from a monomer represented by Formula (III) with respect to 1 mole of the structural unit derived from a nitrile group-containing monomer in the resin comprising a structural unit derived from a nitrile group-containing monomer is from 0.001 moles to 0.2 moles.

<8> The composite resin for an energy device electrode according to any one of <1> to <7>, wherein the nitrile group-containing monomer comprises acrylonitrile.

<9> The composite resin for an energy device electrode according to any one of <1> to <8>, wherein the fluorocarbon resin comprises polyvinylidene fluoride (PVDF).

<10> A composition for forming an energy device electrode, the composition comprising: a positive electrode active material comprising a lithium-containing metal composite oxide comprising lithium and nickel and having a ratio of nickel to metal, excluding lithium, of 50% by mole or more; and the composite resin for an energy device electrode according to any one of <1> to <9>.

<11> The composition for forming an energy device electrode according to <10>, wherein the lithium-containing metal composite oxide comprises a compound represented by the following Formula (I).

$$Li_aNi_bCo_cM_dO_{2+e} \qquad \text{Formula (I)}$$

In Formula (I), M is at least one selected from the group consisting of Al, Mn, Mg and Ca, a, b, c, d, and e satisfy $0.2 \leq a \leq 1.2$, $0.5 \leq b \leq 0.9$, $0.05 \leq c \leq 0.4$, $0 \leq d \leq 0.2$, and $-0.2 \leq e \leq 0.2$, respectively, and $b + c + d = 1$.

<12> A positive electrode for an energy device, the positive electrode comprising:

a positive electrode current collector; and
a positive electrode mixture layer provided on at least one surface of the positive electrode current collector and comprising the composition for forming an energy device electrode according to <10> or <11>.

<13> An energy device comprising the positive electrode for an energy device according to <12>.

<14> The energy device according to <13>, wherein the energy device is a lithium ion secondary battery.

Advantageous Effects of Invention

According to the invention, a composite resin for an energy device electrode suppressing gelation and sedimentation of slurry, and a composition for forming an energy device electrode, a positive electrode for an energy device and an energy device, which use the composite resin, are provided.

DESCRIPTION OF EMBODIMENTS

Preferred embodiments of the invention are described below. It is noted here that matters required for carrying out the invention, which exclude those matters specifically mentioned in the present specification, may be construed as design matters for those of ordinary skill in the art based on the prior art in a field of energy devices. The invention can be carried out based on the matters disclosed in the present specification and the common technical knowledge in the field of energy devices.

In the present specification, the term "step" encompasses not only steps discrete from other steps but also steps which cannot be clearly distinguished from other steps, as long as the intended purpose of the step is achieved.

In the present specification, those numerical ranges that are expressed with "to" each denote a range that includes the numerical values stated before and after "to" as the minimum value and the maximum value, respectively.

In a set of numerical ranges that are stated stepwisely in the present specification, the upper limit value or the lower limit value of a numerical range may be replaced with the upper limit value or the lower limit value of other numerical range. Further, in a numerical range stated in the present specification, the upper limit or the lower limit of the numerical range may be replaced with a relevant value indicated in any of Examples.

In the present specification, when there are plural kinds of substances that correspond to a component of a composition, the indicated content ratio of the component in the composition means, unless otherwise specified, the total content ratio of the plural kinds of substances existing in the composition.

In the present specification, when there are plural kinds of particles that correspond to a component of a composition, the indicated particle size of the component in the composition means, unless otherwise specified, a value determined for a mixture of the plural kinds of particles existing in the composition.

In the present specification, the term "layer" or "film" includes, when observing a region where a layer or film is present, a case in which the layer or the film is formed only on a part of the region in addition to a case in which the layer or the film is formed on the entirety of the region.

In the present specification, "(meth)acrylic" means at least one of acrylic and methacrylic, "(meth)acrylate" means at least one of acrylate and methacrylate.

In the present specification, "binder resin" refers to a resin having a function of binding particles such as an active material.

< Composite Resin for Energy Device Electrode >

The composite resin for an energy device electrode of the disclosure contains a resin including a structural unit derived from a nitrile group-containing monomer and a fluorocarbon resin. The composite resin for an energy device electrode of the disclosure may be used for forming a positive electrode mixture layer containing a positive electrode active material containing a lithium-containing metal composite oxide containing lithium and nickel and having a ratio of nickel to metal, excluding lithium, of 50% by mole or more (hereinafter, referred to as "specific metal oxide" in some cases).

When the composite resin for an energy device electrode of the disclosure is used to form a positive electrode mixture layer, gelation of slurry and sedimentation of slurry are suppressed. The composite resin for an energy device electrode of the disclosure is particularly useful when used to form a positive electrode mixture layer containing a positive electrode active material containing a specific metal oxide.

The reason is not clear but is presumed as follows.

In the disclosure, the term "sedimentation of slurry" refers to a phenomenon in which a positive electrode active material sediment in a slurry in which a positive electrode active material, a conductive material, a binder resin, and the like are mixed with a solvent such as *N*-methyl-2-pyrrolidone (NMP). When a positive electrode mixture layer is formed on a current collector foil using a slurry in which a positive electrode active material has been sedimented, the homogeneity of the positive electrode mixture layer may be impaired, which, in some cases, may cause a failure of a coating machine.

A fluorocarbon resin such as PVDF tends to be altered by an elimination reaction of HF when in contact with a basic substance such as LiOH. Therefore, when a mixture layer is formed using a fluorocarbon resin such as PVDF, a slurry containing a fluorocarbon resin such as PVDF tends to gel. In particular, when a positive electrode active material containing a specific metal oxide is used, a slurry tends to gel.

On the other hand, a nitrile group in a resin containing a structural unit derived from a nitrile group-containing monomer is less likely to cause an elimination reaction when in contact with a basic substance, as compared to a fluorine atom. Therefore, a resin containing a structural unit derived from a nitrile group-containing monomer tends to be less likely to alter when in contact with a basic substance, as compared to a fluorocarbon resin.

A resin containing a structural unit derived from a nitrile group-containing monomer tends to be adsorbed to a particulate conductive material, and tends to excessively disperse the particulate conductive material in a slurry. When the particulate conductive material is in an excessively dispersed state, a high-order structure of the conductive material is not easily formed, and the positive electrode active material is hardly held in the high-order structure of the conductive material. Therefore, when a mixture layer is formed using a resin containing a structural unit derived from a nitrile group-containing monomer, a slurry using a resin containing a structural unit derived from a nitrile group-containing monomer tends to sediment. In particular, when the content of a conductive material in a mixture layer is 1.5% by mass or less, a slurry tends to sediment.

On the other hand, since a fluorocarbon resin such as PVDF contains a fluorine atom in the fluorocarbon resin, it is difficult to disperse a particulate conductive material, and a high-order structure of the conductive material is easily formed. Therefore, a positive electrode active material is easily held in the higher-order structure of the conductive material, and a slurry tends to be less likely to sediment.

It is presumed that since the composite resin for an energy device electrode of the disclosure contains a resin containing a structural unit derived from a nitrile group-containing monomer and a fluorocarbon resin, an effect of suppressing gelation of a slurry of a resin containing a structural unit derived from a nitrile group-containing monomer and an effect of suppressing sedimentation of a slurry of a fluorocarbon resin are exhibited, and gelation of a slurry and sedimentation of a slurry are suppressed.

In particular, even when a positive electrode active material containing a specific metal oxide is used, a slurry is less likely to gel. Furthermore, even when a slurry in which the content of a conductive material in a mixture layer is 1.5% by mass or less, sedimentation of the slurry is less likely to occur.

In the disclosure, the term "fluorocarbon resin" refers to a resin containing a structural unit in which part or all of hydrogen atoms in the polyethylene skeleton are substituted by fluorine atoms in the main chain.

In the disclosure, a resin containing a structural unit derived from a nitrile group-containing monomer refers to a resin that contains a structural unit derived from a nitrile group-containing monomer in the main chain and does not contain a structural unit in which a part or all of hydrogen atoms in the polyethylene skeleton are substituted with fluorine

atoms.

Hereinafter, components which constitute the composite resin for an energy device electrode of the disclosure will be described in detail. A positive electrode active material will also be described below.

(Resin Containing Structural Unit Derived from Nitrile Group-containing Monomer)

The composite resin for an energy device electrode of the disclosure contains a resin including a structural unit derived from a nitrile group-containing monomer.

- Nitrile Group-containing Monomer -

The nitrile group-containing monomer used in the disclosure is not particularly limited. The nitrile group-containing monomer include an acrylic nitrile group-containing monomer such as acrylonitrile or methacrylonitrile, a cyan nitrile group-containing monomer such as α-cyanoacrylate or dicyanovinylidene, and a fumaric-based nitrile group-containing monomer such as fumaronitrile.

Among these, acrylonitrile is preferable in view of easiness of polymerization, cost performance, and pliability, flexibility, oxidation resistance, swelling resistance to an electrolytic solution, and the like of an electrode. The ratio of acrylonitrile to the nitrile group-containing monomer is, for example, preferably from 5% by mass to 100% by mass, more preferably from 50% by mass to 100% by mass, and still more preferably from 70% by mass to 100% by mass. These nitrile group-containing monomers may be used singly or in combination of two or more kinds thereof.

When using acrylonitrile and methacrylonitrile in combination as a nitrile group-containing monomer, the content of acrylonitrile is, for example, preferably from 5% by mass to 95% by mass, and more preferably from 50% by mass to 95% by mass, with respect to the total amount of the nitrile group-containing monomer.

- Monomer Represented by Formula (II) -

It is preferable that a resin containing a structural unit derived from a nitrile group-containing monomer used in the disclosure further contains a structural unit derived from a monomer represented by Formula (II) from a viewpoint of pliability of an electrode.

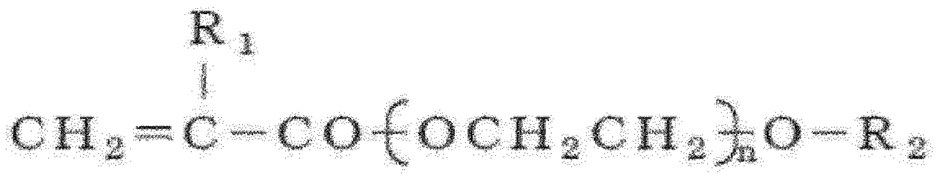

Formula (II)

Here, $R_1$ represents a hydrogen atom or a methyl group.

n represents an integer from 1 to 50, and is, in one aspect, preferably an integer from 2 to 30, more preferably an integer from 2 to 15, and still more preferably an integer from 2 to 10. In another aspect, n is preferably an integer from 1 to 30, more preferably an integer from 1 to 15, and still more preferably an integer from 1 to 10.

$R_2$ represents a hydrogen atom or a monovalent hydrocarbon group, and is preferably, for example, a monovalent hydrocarbon group having from 1 to 30 carbon atoms, more preferably a monovalent hydrocarbon group having from 1 to 25 carbon atoms, and still more preferably a monovalent hydrocarbon group having from 1 to 12 carbon atoms. When the monovalent hydrocarbon group has a substituent, the number of carbon atoms contained in the substituent is not included in the number of carbon atoms of the monovalent hydrocarbon group.

When $R_2$ is a hydrogen atom or a monovalent hydrocarbon group having from 1 to 30 carbon atoms, sufficient swelling resistance to an electrolytic solution tends to be obtained. Here, examples of the monovalent hydrocarbon group include an alkyl group and a phenyl group. $R_2$ is preferably an alkyl group having from 1 to 12 carbon atoms or a phenyl group. The alkyl group may be linear, branched, or cyclic.

In an alkyl group and a phenyl group represented by $R_2$, a part of hydrogen atoms may be substituted by a substituent. Examples of a substituent when $R_2$ is an alkyl group include a halogen atom such as a fluorine atom, a chlorine atom, a bromine atom, or an iodine atom, a substituent containing a nitrogen atom, a substituent containing a phosphorus atom, and an aromatic ring. Examples of a substituent when $R_2$ is a phenyl group include a halogen atom such as a fluorine atom, a chlorine atom, a bromine atom, or an iodine atom, a substituent containing a nitrogen atom, a substituent containing a phosphorus atom, an aromatic ring, and a linear, branched, or cyclic alkyl group having from 3 to 10 carbon atoms.

As a monomer represented by Formula (II), a commercially available product or a synthetic product may be

used. Specific examples of a commercially available monomer represented by Formula (II) include 2-methoxyethyl acrylate, ethoxydiethylene glycol acrylate (trade name: LIGHT ACRYLATE EC-Amanufactured by KYOEISHA CHEMICAL Co., LTD.), methoxytriethylene glycol acrylate (trade name: LIGHT ACRYLATE MTG-A manufactured by KYOEISHA CHEMICAL Co., LTD., and trade name: NK ESTER AM-30G manufactured by Shin-Nakamura Chemical Co., Ltd.), methoxy poly (n=9) ethylene glycol acrylate (trade name: LIGHT ACRYLATE 130-A manufactured by KYOEISHA CHEMICAL Co., LTD., and trade name: NK ESTER AM-90G manufactured by Shin-Nakamura Chemical Co., Ltd.), methoxy poly (n=13) ethylene glycol acrylate (trade name: NK ESTER AM-130G manufactured by Shin-Nakamura Chemical Co., Ltd.), methoxy poly (n=23) ethylene glycol acrylate (trade name: NK ESTER AM-230G manufactured by Shin-Nakamura Chemical Co., Ltd.), octoxy poly (n=18) ethylene glycol acrylate (trade name: NK ESTER A-OC-18E manufactured by Shin-Nakamura Chemical Co., Ltd.), phenoxy diethylene glycol acrylate (trade name: LIGHT ACRYLATE P-200A manufactured by KYOEISHA CHEMICAL Co., LTD., and trade name: NK ESTER AMP-20GY manufactured by Shin-Nakamura Chemical Co., Ltd.), phenoxy poly (n=6) ethylene glycol acrylate (trade name: NK ESTER AMP-60G manufactured by Shin-Nakamura Chemical Co., Ltd.), nonyl phenol EO adduct (n=4) acrylate (trade name: LIGHT ACRYLATE NP-4EA manufactured by KYOEISHA CHEMICAL Co., LTD.), nonyl phenol EO adduct (n=8) acrylate (trade name: LIGHT ACRYLATE NP-8EA manufactured by KYOEISHA CHEMICAL Co., LTD.), methoxy diethylene glycol methacrylate (trade name: LIGHT ESTER MC manufactured by KYOEISHA CHEMICAL Co., LTD., and trade name: NK ESTER M-20G manufactured by Shin-Nakamura Chemical Co., Ltd.), methoxy triethylene glycol methacrylate (trade name: LIGHT ESTER MTG manufactured by KYOEISHA CHEMICAL Co., LTD.), methoxy poly (n=9) ethylene glycol methacrylate (trade name: LIGHT ESTER 130MA manufactured by KYOEISHA CHEMICAL Co., LTD., and trade name: NK ESTER M-90G manufactured by Shin-Nakamura Chemical Co., Ltd.), methoxy poly (n=23) ethylene glycol methacrylate (trade name: NK ESTER M-230G manufactured by Shin-Nakamura Chemical Co., Ltd.) and methoxy poly (n=30) ethylene glycol methacrylate (trade name: LIGHT ESTER 041MA manufactured by KYOEISHA CHEMICAL Co., LTD.).

Among these, a methoxytriethylene glycol acrylate (a compound in which, in Formula (II), $R_1$ is H, $R_2$ is $CH_3$, and n is 3) is more preferable from the viewpoint of reactivity when copolymerizing with a nitrile group-containing monomer such as acrylonitrile. Monomers represented by Formula (II) may be used singly or in combination of two or more kinds thereof.

- Monomer Represented by Formula (III) -

It is preferable that a resin containing a structural unit derived from a nitrile group-containing monomer used in the disclosure further contains a structural unit derived from a monomer represented by Formula (III) from a viewpoint of pliability of an electrode.

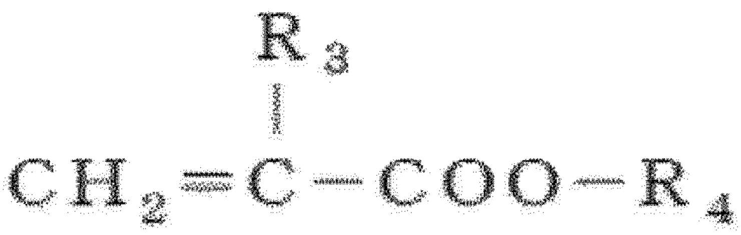

Formula (III)

Here, $R_3$ represents a hydrogen atom or a methyl group. $R_4$ represents an alkyl group having from 4 to 30 carbon atoms, preferably an alkyl group having from 5 to 25 carbon atoms, and more preferably an alkyl group having from 6 to 20 carbon atoms, and still more preferably an alkyl group having from 8 to 16 carbon atoms. When the number of carbon atoms of the alkyl group represented by $R_4$ is 4 or more, sufficient flexibility tends to be obtained. When the number of carbon atoms of the alkyl group represented by $R_4$ is 30 or less, sufficient swelling resistance to an electrolytic solution tends to be obtained. When the alkyl group represented by $R_4$ has a substituent, the number of carbon atoms contained in the substituent is not included in the number of carbon atoms of the alkyl group.

The alkyl group represented by $R_4$ may be linear, branched, or cyclic.

In the alkyl group represented by $R_4$, a part of hydrogen atoms may be substituted by a substituent. Examples of the substituent include a halogen atom such as a fluorine atom, a chlorine atom, a bromine atom, or an iodine atom, a substituent containing a nitrogen atom, a substituent containing a phosphorus atom, an aromatic ring, and a cycloalkyl group having from 3 to 10 carbon atoms Examples of the alkyl group represented by $R_4$ include, in addition to a linear, branched, or cyclic alkyl group, a halogenated alkyl group such as a fluoroalkyl group, a chloroalkyl group, a bromoalkyl group, or an iodide alkyl group.

As the monomer represented by Formula (III), a commercially available product or a synthetic product may be

used. Specific examples of the monomer represented by Formula (III) which can be obtained as a commercially available product include a (meth)acrylic ester containing an alkyl group having from 4 to 30 carbon atoms such as *n*-butyl (meth)acrylate, isobutyl (meth)acrylate, *t*-butyl (meth)acrylate, amyl (meth)acrylate, isoamyl (meth)acrylate, hexyl (meth)acrylate, heptyl (meth)acrylate, octyl (meth)acrylate, 2-ethyl hexyl (meth)acrylate, nonyl (meth)acrylate, decyl (meth)acrylate, isodecyl (meth)acrylate, lauryl (meth)acrylate, tridecyl (meth)acrylate, hexadecyl (meth)acrylate, stearyl (meth)acrylate, isostearyl (meth)acrylate, cyclohexyl (meth)acrylate, or isobornyl (meth)acrylate.

When $R_4$ is a fluoroalkyl group, examples the monomer include an acrylate compound such as 1,1-bis(trifluoromethyl)-2,2,2-trifluoroethyl acrylate, 2,2,3,3,4,4,4-heptafluorobutyl acrylate, 2,2,3,4,4,4-hexafluorobutyl acrylate, nonafluoroisobutyl acrylate, 2,2,3,3,4,4,5,5-octafluoropentyl acrylate, 2,2,3,3,4,4,5,5,5-nonafluoropentyl acrylate, 2,2,3,3,4,4,5,5,6,6,6-undecafluorohexyl acrylate, 2,2,3,3,4,4,5,5,6,6,7,7,8,8,8-pentadecafluorooctyl acrylate, 3,3,4,4,5,5,6,6,7,7,8,8,9,9,10,10,10-heptadecafluorodecyl acrylate, or 2,2,3,3,4,4,5,5,6,6,7,7,8,8,9,9,10,10,10-nonadecafluorodecyl acrylate, and a methacrylate compound such as nonafluoro-t-butyl methacrylate, 2,2,3,3,4,4,4-heptafluorobutyl methacrylate, 2,2,3,3,4,4,5,5-octafluoropentyl methacrylate, 2,2,3,3,4,4,5,5,6,6,7,7-dodecafluoroheptyl methacrylate, heptadecafluorooctyl methacrylate, 2,2,3,3,4,4,5,5,6,6,7,7,8,8,8-pentadecafluorooctyl methacrylate, or 2,2,3,3,4,4,5,5,6,6,7,7,8,8,9,9-hexadecafluorononyl methacrylate.

Monomers represented by Formula (III) may be used singly or in combination of two or more kinds thereof.

- Carboxy Group-containing Monomer -

From the viewpoint of adhesion between a current collector and a mixture layer, a resin containing a structural unit derived from a nitrile group-containing monomer used in the disclosure may contain a structural unit that is derived from a carboxy group-containing monomer and that contains a carboxy group.

The carboxy group-containing monomer is not particularly limited, and examples thereof include an acrylic carboxy group-containing monomer such as acrylic acid or methacrylic acid, a crotonic carboxy group-containing monomer such as crotonic acid, a maleic carboxy group-containing monomer such as maleic acid or an anhydride thereof, an itaconic carboxy group-containing monomer such as itaconic acid or an anhydride thereof, and a citraconic carboxy group-containing monomer such as citraconic acid or an anhydride thereof.

Among these, acrylic acid is preferred from the viewpoint of easiness of polymerization, cost performance, pliability and flexibility of electrode, and the like. Carboxy group-containing monomers may be used singly, or in combination of two or more kinds thereof. When a resin containing a structural unit derived from a nitrile group-containing monomer used in the disclosure uses acrylic acid and methacrylic acid in combination as a carboxy group-containing monomer, the content of acrylic acid is, for example, preferably from 5% by mass to 95% by mass, and more preferably from 50% by mass to 95% by mass, with respect to the total amount of carboxy group-containing monomers.

- Other Monomers -

For the resin containing a structural unit derived from a nitrile group-containing monomer used in the disclosure, a structural unit derived from a nitrile group-containing monomer, and a structural unit derived from a monomer represented by Formula (II), a structural unit derived from a monomer represented by Formula (III), and a structural unit that is derived from a carboxy group-containing monomer and that contains a carboxy group if necessary, and a structural unit derived from other monomers different from these monomers as appropriate can be combined.

Other monomers are not particularly limited, and examples thereof include a (meth)acrylic ester containing a short chain alkyl group such as methyl (meth)acrylate, ethyl (meth)acrylate, or propyl (meth)acrylate, a vinyl halide such as vinyl chloride, vinyl bromide, or vinylidene chloride, maleic imide, phenyl maleimide, (meth)acrylamide, styrene, $\alpha$-methylstyrene, vinyl acetate, sodium (meth)allyl sulfonate, sodium (meth)allyloxybenzene sulfonate, sodium styrene sulfonate, and 2-acrylamido-2-methylpropane sulfonic acid, and a salt thereof. These other monomers may be used singly or in combination of two or more kinds thereof.

- Ratio of Structural Unit Derived from Each Monomer -

When a resin containing a structural unit derived from a nitrile group-containing monomer used in the disclosure contains at least one selected from the group consisting of a structural unit derived from a monomer represented by Formula (II), a structural unit derived from a monomer represented by Formula (III), and a structural unit that is derived from a carboxy group-containing monomer and that contains a carboxy group, the ratio with respect to 1 mole of structural units derived from a nitrile group-containing monomer is preferably the following molar ratios.

When a resin containing a structural unit derived from a nitrile group-containing monomer used in the disclosure includes a structural unit derived from a monomer represented by Formula (II), the ratio of the structural unit derived from a monomer represented by Formula (II) to 1 mole of a structural unit derived from a nitrile group-containing monomer

is preferably from 0.001 moles to 0.2 moles, more preferably from 0.003 moles to 0.05 moles, and still more preferably from 0.005 moles to 0.02 moles.

When the ratio of the structural unit derived from a monomer represented by Formula (II) with respect to 1 mole of a structural unit derived from a nitrile group-containing monomer is from 0.001 moles to 0.2 moles, the pliability and flexibility of an electrode tend to be favorable without impairing the adhesion to a positive electrode current collector, particularly to a positive electrode current collector using an aluminum foil, and the swelling resistance to an electrolytic solution.

When a resin containing a structural unit derived from a nitrile group-containing monomer used in the disclosure contains a structural unit derived from a monomer represented by Formula (III), the ratio of the structural unit derived from the monomer represented by Formula (III) to 1 mole of the structural unit derived from the nitrile group-containing monomer is preferably from 0.001 moles to 0.2 moles, more preferably from 0.003 moles to 0.05 moles, and still more preferably from 0.005 moles to 0.02 moles.

The ratio of a structural unit derived from a monomer represented by Formula (III) to 1 mole of a structural unit derived from a nitrile group-containing monomer is from 0.001 moles to 0.2 moles, pliability and flexibility of an electrode tend to be favorable without impairing adhesion to a positive electrode current collector, particularly to a positive electrode current collector using an aluminum foil, and swelling resistance to an electrolytic solution.

When a resin containing a structural unit derived from a nitrile group-containing monomer used in the disclosure contains a structural unit that is derived from a carboxy group-containing monomer and that contains a carboxy group, the ratio of a structural unit that is derived from a carboxy group-containing monomer and that contains a carboxy group to 1 mole of a structural unit derived from a nitrile group-containing monomer is preferably from 0.01 moles to 0.2 moles, more preferably from 0.02 moles to 0.1 moles, and still more preferably from 0.03 moles to 0.06 moles.

When the ratio of a structural unit that is derived from a carboxy group-containing monomer and that contains a carboxy group to 1 mole of a structural unit derived from a nitrile group-containing monomer is from 0.01 moles to 0.2 moles, adhesion to a positive electrode current collector, particularly a positive electrode current collector using an aluminum foil, and swelling resistance to an electrolytic solution tend to be excellent without impairing pliability and flexibility of an electrode.

In one aspect, the ratio of a structural unit that is derived from a carboxy group-containing monomer and that contains a carboxy group to 1 mole of a structural unit derived from a nitrile group-containing monomer in a resin containing a structural unit derived from a nitrile group-containing monomer may be less than 0.01 moles, may be 0.005 moles or less, or may be 0 moles.

When a resin containing a structural unit derived from a nitrile group-containing monomer used in the disclosure contains a structural unit derived from the other monomers, the ratio of a structural unit derived from the other monomers to 1 mole of a structural unit derived from a nitrile group-containing monomer is preferably from 0.005 moles to 0.1 moles, more preferably from 0.01 moles to 0.06 moles, and still more preferably from 0.03 moles to 0.05 moles.

The content of a structural unit derived from a nitrile group-containing monomer in a resin containing a structural unit derived from a nitrile group-containing monomer used in the disclosure is, based on the total amount of a resin containing a structural unit derived from a nitrile group-containing monomer, preferably 80% by mole or more, and more preferably 90% by mole or more.

The resin containing a structural unit derived from a nitrile group-containing monomer used in the disclosure may contain a structural unit derived from a crosslinking component for complementing swelling resistance to an electrolytic solution, a structural unit derived from a rubber component for complementing pliability and flexibility of an electrode, and the like.

- Method of Producing Resin Containing Structural Unit Derived from Nitrile Group-containing Monomer -

Examples of the polymerization method of synthesizing a resin containing a structural unit derived from a nitrile group-containing monomer used in the disclosure include precipitation polymerization, bulk polymerization, suspension polymerization, emulsion polymerization, and solution polymerization, but there is no particular limitation. Precipitation polymerization in water is preferable in view of easiness of synthesis, easiness of post-treatment such as recovery or purification.

Hereinafter, precipitation polymerization in water will be described in detail.

- Polymerization Initiator -

As a polymerization initiator at the time of performing precipitation polymerization in water, a water-soluble polymerization initiator is preferable in view of the polymerization initiation efficiency and the like.

Examples of the water-soluble polymerization initiator include a persulfate such as ammonium persulfate, potassium persulfate, or sodium persulfate, a water-soluble peroxide such as hydrogen peroxide, a water-soluble azo

compound such as 2,2'-azobis(2-methylpropionamidine hydrochloride), and oxidation-reduction type (redox type) initiator combining an oxidant such as persulfate, a reducing agent such as sodium bisulfite, ammonium bisulfite, sodium thiosulfate, or hydrosulfite, and a polymerization accelerator such as sulfuric acid, iron sulfate, or copper sulfate.

Among these, a persulfate, a water-soluble azo compound, and the like are preferable in terms of easiness of resin synthesis and the like. Among persulfates, ammonium persulfate is particularly preferable.

When acrylonitrile is selected as a nitrile group-containing monomer, acrylic acid is selected as a carboxy group-containing monomer, and methoxytriethylene glycol acrylate is selected as a monomer represented by Formula (II), and precipitation polymerization is carried out in water, since all three are water-soluble in a state of a monomer, a water-soluble polymerization initiator works effectively, and polymerization starts smoothly. Then, as the polymerization proceeds, a polymer precipitates, and a reaction system is in a suspended state, and a resin containing a structural unit derived from a nitrile group-containing monomer with a small amount of unreacted products is finally obtained in high yield.

The polymerization initiator is preferably used, for example, in the range of from 0.001% by mole to 5% by mole, and more preferably in the range of from 0.01% by mole to 2% by mole with respect to the total amount of monomers used in the synthesis of a resin containing a structural unit derived from a nitrile group-containing monomer.

- Chain Transfer Agent -

When precipitation polymerization in water is carried out, a chain transfer agent can be used for the purpose of molecular weight control and the like. Examples of the chain transfer agent include a mercaptan compound, carbon tetrachloride, and $\alpha$-methylstyrene dimer. Among these, $\alpha$-methylstyrene dimer is preferable in terms of low odor or the like.

- Solvent -

When precipitation polymerization in water is carried out, a solvent other than water may be added if necessary for adjusting the particle diameter of a resin to be precipitated.

Examples of the solvent other than water include an amide such as N-methyl-2-pyrrolidone, N,N-dimethylacetamide, or N,N-dimethylformamide, a urea such as N,N-dimethylethyleneurea, N,N-dimethylpropyleneurea, or tetramethylurea, a lactone such as $\gamma$-butyrolactone or $\gamma$-caprolactone, a carbonate such as propylene carbonate, a ketone such as acetone, methyl ethyl ketone, methyl isobutyl ketone, or cyclohexanone, an ester such as methyl acetate, ethyl acetate, n-butyl acetate, butyl cellosolve acetate, butyl carbitol acetate, ethyl cellosolve acetate, or ethyl carbitol acetate, a glyme such as diglyme, triglyme, or tetraglyme, a hydrocarbon such as toluene, xylene, or cyclohexane, a sulfoxide such as dimethyl sulfoxide, a sulfone such as sulfolane, and an alcohol such as methanol, isopropanol, or n-butanol. These solvents may be used singly, or in combination of two or more kinds thereof.

- Polymerization Method -

Precipitation polymerization in water is carried out, for example, by introducing a nitrile group-containing monomer, and a carboxy group-containing monomer, a monomer represented by Formula (II), a monomer represented by Formula (III), and the other monomers used if necessary into a solvent and maintaining the polymerization temperature at preferably from 0°C to 100°C, and more preferably from 30°C to 95°C for preferably from 1 hour to 50 hours, and more preferably from 2 hours to 12 hours.

When the polymerization temperature is 0°C or higher, a polymerization reaction tends to be promoted. When the polymerization temperature is 100°C or less, even when water is used as a solvent, failure to polymerize due to water evaporation tends to be unlikely.

The weight average molecular weight of the resin containing a structural unit derived from a nitrile group-containing monomer used in the disclosure is preferably from 10,000 to 1,000,000, more preferably from 100,000 to 800,000, and still more preferably from 250,000 to 700,000.

In the disclosure, the weight average molecular weight refers to a value measured by the following method.

A measurement target is dissolved in N-methyl-2-pyrrolidone, and insolubles are removed through PTFE (polytetrafluoroethylene) filter [manufactured by KURABO INDUSTRIES LTD., for HPLC (high-performance liquid chromatography) pretreatment, chromatodisc, model number: 13 N, pore diameter: 0.45 $\mu$m]. The weight average molecular weight is measured using GPC [a pump: L6200 PUMP (manufactured by Hitachi, Ltd.), a detector: DIFFERENTIAL REFRACTIVE INDEX DETECTOR L3300 RI MONITOR (manufactured by Hitachi, Ltd.), columns: TSKGEL-G5000HXL and TSKGEL-G2000HXL (2 in total) (both manufactured by Tosoh Corporation) connected in series, column temperature: 30°C, eluent: *N*-methyl-2-pyrrolidone, flow rate: 1.0 mL/min, standard substance: polystyrene].

The acid value of the resin containing a structural unit derived from a nitrile group-containing monomer used in the disclosure is preferably from 0 mg KOH/g to 40 mg KOH/g, more preferably from 0 mg KOH/g to 10 mg KOH/g,

and still more preferably from 0 mg KOH/g to 5 mg KOH/g.

In the disclosure, the acid value refers to a value measured by the following method.

First, after accurately weighing 1 g of a measurement target, 30 g of acetone is added to the measurement target, and the measurement target is dissolved. Next, an appropriate amount of phenolphthalein which is an indicator is added to a solution of the measurement target, and titration is performed using a 0.1 N aqueous solution of KOH. From the titration result, the acid value is calculated by Formula (A) (in Formula (A), Vf indicates the titration amount (mL) of phenolphthalein, Wp indicates the mass (g) of the solution of the measurement target, and I indicates the proportion (% by mass) of a non-volatile content of the solution of the measurement target).

$$\text{acid value (mgKOH/g)} = 10 \times Vf \times 56.1/(Wp \times I) \quad (A)$$

The non-volatile content of the solution of the measurement target is calculated from the mass of a residue obtained by taking about 1 mL of the solution of the measurement target in an aluminum pan and drying on a hot plate heated to 160°C for 15 minutes.

When polymerizing a nitrile group-containing monomer, and a carboxy group-containing monomer, a monomer represented by Formula (II), a monomer represented by Formula (III), and the other monomers used if necessary, in particular, since the heat of polymerization of a nitrile group-containing monomer and a carboxy group-containing monomer used if necessary is large, it is preferable to proceed the polymerization while dropping these monomers into a solvent.

A resin containing a structural unit derived from a nitrile group-containing monomer used in the disclosure is produced by polymerization as described above, and is usually used in the form of a varnish dissolved in a solvent. There is no particular limitation on a solvent used for preparation of a varnish-like resin containing a structural unit derived from a nitrile group-containing monomer, and, for example, a solvent which can be added when performing the above-described precipitation polymerization in water, and water can be used. Among these, an amide, a urea, a lactone, or a mixed solvent containing them is preferable in terms of solubility of a resin containing a structural unit derived from a nitrile group-containing monomer used in the disclosure, and the like, and among these, *N*-methyl-2-pyrrolidone, γ-butyrolactone, or a mixed solvent containing them is more preferable. These solvents may be used singly, or in combination of two or more kinds thereof.

The amount of the solvent used is not particularly limited as long as the amount is equal to or more than the necessary minimum amount at which a resin containing a structural unit derived from a nitrile group-containing monomer can maintain a dissolved state at normal temperature (25°C). Since, in a slurry preparation process in production of an electrode of an energy device described below, the viscosity of a slurry is usually adjusted while adding a solvent, the amount is preferably any amount by which the slurry is not diluted excessively.

(Fluorocarbon Resin)

The composite resin for an energy device electrode of the disclosure contains a fluorocarbon resin. The fluorocarbon resin used in the disclosure is not particularly limited as long as the resin is a resin containing a structural unit in which part or all of hydrogen atoms in the polyethylene skeleton are substituted with fluorine atoms in the main chain.

Examples of the fluorocarbon resin include a homopolymer such as polytetrafluoroethylene (PTFE), polyvinylidene fluoride (PVDF), polyvinyl fluoride (PVF), or polychlorotrifluoroethylene (PCTFE), a copolymer such as tetrafluoroethylene-perfluoropropylene copolymer (FEP), tetrafluoroethylene-perfluoropropylene copolymer (PFA), tetrafluoroethylene-ethylene copolymer (ETFE), or chlorotrifluoroethylene-ethylene copolymer, and a modified product obtained by modifying a carboxy group or the like to them. Among these, PVDF is preferable from the viewpoint of solubility in a solvent, swelling in an electrolytic solution, pliability of a resin, and the like. These fluorocarbon resins may be used singly, or in combination of two or more kinds thereof.

- Blending Ratio of Each Resin -

The composition of the composite resin for an energy device electrode of the disclosure is not particularly limited as long as the composition contains a resin containing a structural unit derived from a nitrile group-containing monomer and a fluorocarbon resin.

In one aspect, the mixing ratio of a resin containing a structural unit derived from a nitrile group-containing monomer and a fluorocarbon resin (resin containing a structural unit derived from a nitrile group-containing monomer: fluorocarbon resin) on a mass basis is preferably from 90:10 to 50:50. Regarding the properties of a slurry containing the composite resin for an energy device electrode of the disclosure, as the proportion of a resin containing a structural

unit derived from a nitrile group-containing monomer is large, gelation of the slurry tends to be difficult, and as the amount of a fluorocarbon resin increases, an active material in the slurry tends to be less likely to sediment.

Since a resin containing a structural unit derived from a nitrile group-containing monomer and a fluorocarbon resin have different swelling properties to an electrolytic solution, regarding battery characteristics, as a resin containing a structural unit derived from a nitrile group-containing monomer increases, the cycle characteristics tend to be improved, and as the amount of a fluorocarbon resin increases, the battery resistance tends to be lowered. From these tendencies, the mixing ratio of a resin containing a structural unit derived from a nitrile group-containing monomer and a fluorocarbon resin (resin containing structural unit derived from nitrile group-containing monomer: fluorocarbon resin) on a mass basis is more preferably from 90:10 to 55:45, still more preferably 80:20 to 60:40, and particularly preferably from 75:25 to 65:35.

In one aspect, the mixing ratio of a resin containing a structural unit derived from a nitrile group-containing monomer and a fluorocarbon resin (resin containing structural unit derived from nitrile group-containing monomer: fluorocarbon resin) on a mass basis is preferably 10:90 to 50:50, more preferably 10:90 to 45:55, still more preferably 10:90 to 40:60, and particularly preferably from 10:90 to 35:65

When a composite resin for an energy device electrode according to the disclosure in which the mixing ratio of a resin containing a structural unit derived from a nitrile group-containing monomer and a fluorocarbon resin on a mass basis is from 10:90 to 50:50 is combined with a specific metal oxide subjected to a washing process described below, generation of gas from an energy device tends to be suppressed.

< Composition for Forming Energy Device Electrode >

The composition for forming an energy device electrode of the disclosure contains a positive electrode active material containing a specific metal oxide, and a composite resin for an energy device electrode of the disclosure.

Hereinafter, each component contained in the composition for forming an energy device electrode of the disclosure will be described. Preferred aspects of the composite resin for an energy device electrode of the disclosure included in the composition for forming an energy device electrode of the disclosure are as described above.

(Positive Electrode Active Material)

A positive electrode active material contained in the composition for forming an energy device electrode of the disclosure contains a specific metal oxide. By using a specific metal oxide as a positive electrode active material, for example, the energy density of a lithium ion secondary battery, which is one example of an energy device, can be improved.

Even when a specific metal oxide is used as a positive electrode active material, by combining a specific metal oxide with the composite resin for an energy device electrode of the disclosure, gelation of a slurry and sedimentation of a slurry containing the composition for forming an energy device electrode of the disclosure are suppressed.

In particular, in order to increase the charge and discharge capacity per unit mass in the above-described positive electrode active material when a specific metal oxide is used as the positive electrode active material, and to obtain a high capacity positive electrode for an energy device, the specific metal oxide preferably contains a compound represented by the following Formula (I).

$$Li_aNi_bCo_cM_dO_{2+e} \qquad \text{Formula (I)}$$

In Formula (I), M is at least one selected from the group consisting of Al, Mn, Mg, and Ca, a, b, c, d, and e satisfy $0.2 \leq a \leq 1.2$, $0.5 \leq b \leq 0.9$, $0.05 \leq c \leq 0.4$, $0 \leq d \leq 0.2$, and $-0.2 \leq e \leq 0.2$, respectively, and $b + c + d = 1$. "a" which shows the molar ratio of lithium increases and decreases by charge and discharge.

In the compound represented by Formula (I), as the ratio of Ni increases, the capacity density of a positive electrode active material increases, and as the ratio of Ni decreases, the thermodynamic stability of a positive electrode active material tends to increase, and therefore, the ratio (b) of Ni is preferably $0.5 \leq b \leq 0.9$, more preferably $0.55 \leq b \leq 0.85$, and still more preferably $0.6 \leq b \leq 0.8$.

The discharge performance of a positive electrode active material improves as the ratio of Co increases, and the capacity density of a positive electrode active material tends to increase as the ratio of Co decreases, and therefore, it is preferable that the ratio of Co satisfies $0.05 \leq c \leq 0.4$, and more preferably $0.1 \leq c \leq 0.4$.

Further, M in Formula (I) can contain at least one element selected from the group consisting of Al, Mn, Mg, and Ca. When such an element is contained, the thermodynamic stability of a positive electrode active material increases, and an increase in resistance caused by nickel entering a lithium site tends to be able to be suppressed. On the other hand, the smaller the ratio of M, the larger the capacity density of a positive electrode active material. From such a viewpoint, it is preferable that the ratio (d) of M is $0 \leq d \leq 0.2$.

The compound represented by Formula (I) can be prepared by a method commonly used in the field of energy devices. An example of such preparation is shown below.

First, a metal salt solution of a metal to be introduced into a positive electrode active material is prepared. As a metal salt, one commonly used in the field of energy devices can be used, and examples thereof include a sulfate, a chloride, a nitrate, and an acetate.

Among these, a nitrate is preferable because it functions as an oxidizing agent in a subsequent baking process to facilitate oxidation of a metal in a raw material for baking and also to evaporate in the baking, and thus hardly remain in the positive electrode active material. The molar ratio of each metal contained in a metal salt solution is preferably equal to the molar ratio of each metal of the positive electrode active material to be prepared.

Next, a lithium source is suspended in pure water. As the lithium source, those commonly used in the field of energy devices can be used, and examples thereof include lithium carbonate, lithium nitrate, lithium hydroxide, lithium acetate, alkyllithium, fatty acid lithium, and halogen lithium. A metal salt solution of the metal is then added, and a lithium salt solution slurry is prepared. At this time, fine particles of lithium-containing carbonate precipitate in the slurry. The average particle diameter of the lithium-containing carbonate in the slurry can be adjusted by the shear rate of the slurry. A precursor of a positive electrode active material is obtained by separating the precipitated lithium-containing carbonate by filtration and then drying.

The obtained lithium-containing carbonate is filled in a baking container and baked in a calcining furnace. Baking is preferably maintained in a heated state under an atmosphere containing oxygen, preferably under an oxygen atmosphere for a predetermined time. Furthermore, the baking is preferably performed under pressure at from 101 kPa to 202 kPa. The amount of oxygen in a composition can be increased by heating under pressure. The baking temperature is preferably from 850°C to 1,200°C, more preferably from 850°C to 1,100°C, and still more preferably from 850°C to 1,000°C. When baking is performed in such a temperature range, the crystallinity of a positive electrode active material tends to be improved.

As the specific metal oxide, one that has been washed by a washing liquid may be used. By washing the specific metal oxide with a washing liquid, a basic substance such as LiOH that may be present in the specific metal oxide is removed. As the washing liquid used for washing the specific metal oxide, a washing liquid for a positive electrode active material generally used conventionally, such as pure water, water adjusted to be acidic or alkaline, or an organic solvent such as alcohol is used. Pure water is preferable as the washing liquid from the viewpoint of purity, economic viewpoints, or the like.

A specific metal oxide can be washed, for example, by sufficiently stirring a specified amount of the specific metal oxide and a washing liquid, leaving them to stand, and then performing solid-liquid separation by a known method such as filtration or decantation, and collecting the specific metal oxide.

By washing the specific metal oxide, it is possible to reduce a basic substance such as LiOH which remains between crystals of the specific metal oxide and the like and causes deterioration of battery characteristics. For that reason, even when the ratio of a fluorocarbon resin is large, such as the mixing ratio of a resin containing a structural unit derived from a nitrile group-containing monomer and a fluorocarbon resin (resin containing a structural unit derived from a nitrile group-containing monomer: fluorocarbon resin) on a mass basis being from 10:90 to 50:50, a slurry is less likely to gel, and generation of gas from an energy device tends to be suppressed.

The composition for forming an energy device electrode of the disclosure can be used together with another lithium-containing metal composite oxide other than specified metal oxides commonly used in the field of energy devices as a positive electrode active material. Examples of commonly used lithium-containing metal composite oxides include $LiCoO_2$, $LNiO_2$, $LiMnO_2$, $LNi_{1/3}Mn_{1/3}Co_{1/3}O_2$, and $LiMn_2O_4$.

When the composition for forming an energy device electrode of the disclosure is used together with another lithium-containing metal composite oxide, the proportion of a specific metal oxide in a positive electrode active material is preferably 70% by mass or more, more preferably 80% by mass or more, and still more preferably 90% by mass or more.

Another lithium-containing metal composite oxide can be arbitrarily selected in accordance with characteristics such as capacity, input/output characteristics, cycle life, voltage, and safety of a target energy device.

Positive electrode active materials may be used singly, or in combination of two or more kinds thereof.

- Conductive Material -

The composition for forming an energy device electrode of the disclosure may contain a conductive material from a viewpoint of reducing resistance of an electrode. As the conductive material, those commonly used in the field of energy devices can be used. Specific examples of the conductive material include carbon black, graphite, carbon fiber, and metal fiber. Examples of the carbon black include acetylene black, ketjen black, channel black, furnace black, lamp black, and thermal black. Examples of the graphite include natural graphite, and artificial graphite. The conductive materials may be used singly, or in combination of two or more kinds thereof.

- Solvent -

When using the composition for forming an energy device electrode of the disclosure as a slurry for forming an electrode, the composition for forming an energy device electrode may contain a solvent.
The solvent used for the slurry is not particularly limited, and may be any solvent as long as the solvent is a solvent capable of uniformly dissolving or dispersing the composite resin for an energy device electrode of the disclosure. As such a solvent, a solvent used in dissolving the composite resin for an energy device electrode of the disclosure to prepare a resin solution is often used as it is, and for example, *N*-methyl-2-pyrrolidone and $\gamma$-butyrolactone are preferable. These solvents may be used singly, or in combination of two or more kinds thereof.

- Another Additive -

Various additives such as a crosslinking component to complement swelling resistance to an electrolytic solution, a rubber component to complement pliability and flexibility of an electrode, and an anti-sedimentation agent, an anti-foaming agent, and a leveling agent for improving coatability of a slurry to an electrode can also be blended with the composition for forming an energy device electrode of the disclosure if necessary.
When using the composition for forming an energy device electrode of the disclosure as a slurry for forming an electrode, in order to improve the dispersion stability and coating property of a slurry, a thickener can be added to the slurry. Examples of the thickener include: a polyacrylic acid derivative such as a polyacrylic acid and an alkali metal salt thereof; and a polyvinyl alcohol-based copolymer such as an ethylene-(meth)acrylic acid copolymer, a polyvinyl alcohol, or an ethylene-vinyl alcohol copolymer.
In the disclosure, carbon dioxide gas may be dissolved in a composition for forming an energy device electrode, and a strongly basic substance such as LiOH that may be present in the composition for forming an energy device electrode may be neutralized, and changed to a weakly basic substance such as $Li_2CO_3$. The neutralization treatment tends to suppress generation of gas from an energy device. The neutralization treatment is particularly effective when the mixing ratio of a resin containing a structural unit derived from a nitrile group-containing monomer and a fluorocarbon resin on a mass basis in a composition for forming an energy device electrode (resin containing a structural unit derived from a nitrile group-containing monomer: fluorocarbon resin) is from 10:90 to 50:50.
By using carbon dioxide gas as a neutralizing agent for a basic substance, there is an advantage that an acid component hardly remains as an impurity in a composition for forming an energy device electrode.
The pressure of carbon dioxide gas when introducing carbon dioxide gas to a composition for forming an energy device electrode is preferably from 0.12 MPa to 100 MPa, and more preferably from 0.2 MPa to 50 MPa, and more preferably from 0.3 MPa to 10 MPa. When carbon dioxide gas is dissolved in a composition for forming an energy device electrode in a pressurized state, the concentrations of carbon dioxide, carbonic acid, carbonate ion, and bicarbonate ion in the composition for forming an energy device electrode can be increased.
After the neutralization treatment is carried out by dissolving carbon dioxide gas in the composition for forming an energy device electrode, excess carbon dioxide gas in the composition for forming an energy device electrode may be removed. A method of removing excess carbon dioxide gas from a composition for forming an energy device electrode is not particularly limited. For example, a cavitation method in which cavitation (local boiling) is generated in a composition for forming an energy device electrode to cause degassing may be used.
When a composition for forming an energy device electrode is neutralized, the composition for forming an energy device electrode may contain a solvent. Since carbon dioxide can be dissolved in a solvent such as *N*-methyl-2-pyrrolidone other than water, the neutralization treatment is particularly effective for a composition for forming an energy device electrode which contains water, *N*-methyl-2-pyrrolidone, or the like as a solvent.
A specific metal oxide contained in a composition for forming an energy device electrode to be subjected to a neutralization treatment may be one which has been washed or one which has not been washed.
Here, in the case of an *N*-methyl-2-pyrrolidone (NMP) solution to which 10% by mass of a composite resin for an energy device electrode is added with respect to the total amount, a suitable viscosity to be adjusted in a slurry preparation step at 25°C is preferably from 500 mPa·s to 50,000 mPa·s, more preferably from 1,000 mPa·s to 20,000 mPa·s, and still more preferably from 2,000 mPa·s to 10,000 mPa·s.
The viscosity is measured using a rotary shear viscometer at 25°C and a shear rate of 1.0 $s^{-1}$.

< PositiveElectrode for Energy Device >

The positive electrode for an energy device of the disclosure (hereinafter, simply referred to as positive electrode in some cases) includes: a positive electrode current collector; and a positive electrode mixture layer provided on at least one surface of the positive electrode current collector and containing the composition for forming an energy device electrode of the disclosure.

The positive electrode for an energy device of the disclosure can be produced without particular limitation utilizing a known method of manufacturing an electrode. An electrode can be produced, for example, by applying a positive electrode slurry containing the active material, the composite resin for an energy device electrode, and a conductive material and a solvent used if necessary, on at least one surface of a positive electrode current collector, then removing the solvent by drying and rolling if necessary, and forming a positive electrode mixture layer on the surface of the positive electrode current collector.

Application of a positive electrode slurry can be performed, for example, using a comma coater or the like. The application is suitably performed in such a manner that the ratio of the positive electrode capacity to the negative electrode capacity (negative electrode capacity/positive electrode capacity) is 1 or more at the opposing electrodes. The application amount of the positive electrode slurry is, for example, as the dry mass of the positive electrode mixture layer, preferably from 5 $g/m^2$ to 500 $g/m^2$, more preferably from 50 $g/m^2$ to 300 $g/m^2$, and still more preferably from 100 $g/m^2$ to 200 $g/m^2$. The larger the amount of application, the easier it is to obtain a lithium ion secondary battery with a large capacity, and the smaller the coating amount, the easier it is to obtain a lithium ion secondary battery with high output.

The removal of the solvent is carried out, for example, by drying preferably at from 50°C to 150°C, more preferably from 80°C to 120°C, preferably from 1 minute to 20 minutes, more preferably from 3 minutes to 10 minutes.

The rolling is performed, for example, using a roll press. The bulk density of the positive electrode mixture layer is, for example, preferably from 2 $g/cm^3$ to 5 $g/cm^3$, and more preferably from 2.5 $g/cm^3$ to 4 $g/cm^3$. Furthermore, for removal of residual solvent and adsorbed water or the like in the positive electrode, vacuum drying may be performed at from 100°C to 150°C for from 1 hour to 20 hours.

As the positive electrode current collector, those commonly used in the field of energy devices can be used. Specific examples thereof include a sheet and foil containing stainless steel, aluminum, titanium, or the like. Among these, a sheet or foil of aluminum is preferable from the electrochemical viewpoint and cost.

The thickness of the sheet and the foil is not particularly limited, and is preferably, for example, from 1 μm to 500 μm, more preferably from 2 μm to 100 μm, and still more preferably from 5 μm to 50 μm.

< Energy Device >

The energy device of the disclosure includes the positive electrode for an energy device of the disclosure.

Examples of the energy device of the disclosure include a lithium ion secondary battery, an electric double layer capacitor, a solar cell, and a fuel cell.

By combining the positive electrode for an energy device of the disclosure, the negative electrode for an energy device, and an electrolytic solution, the lithium ion secondary battery which is one example of the energy device of the disclosure can be obtained.

The energy device of the disclosure is preferably applied to non-aqueous electrolyte energy devices. The non-aqueous electrolyte energy device refers to a storage or power generation device (apparatus) using an electrolytic solution containing a solvent other than water.

Hereinafter, cases in which the energy device of the disclosure is applied to a lithium ion secondary battery will be described.

A lithium ion secondary battery includes, for example, a positive electrode for an energy device, a negative electrode for an energy device, a separator interposed between the positive electrode for an energy device and the negative electrode for an energy device, and an electrolytic solution. The positive electrode for an energy device of the disclosure is used as the positive electrode for an energy device.

(Negative Electrode for Energy Device)

The negative electrode for an energy device (hereinafter, simply referred to as negative electrode in some cases) has a negative electrode current collector and a negative electrode mixture layer provided on at least one surface of the negative electrode current collector. The negative electrode mixture layer contains a negative electrode active material, a binder resin, and, if necessary, a conductive material.

As the negative electrode active material, those commonly used in the field of energy devices can be used. Specific examples thereof include metal lithium, a lithium alloy, a metal compound, a carbon material, a metal complex, and an organic polymer compound. Negative electrode active materials may be used singly, or in combination of two or more kinds thereof.

Among these, as the negative electrode active material, a carbon material is preferable. Examples of the carbon material include: graphite such as natural graphite (flaky graphite or the like) or artificial graphite; carbon black such as acetylene black, ketjen black, channel black, furnace black, lamp black, or thermal black; amorphous carbon; and carbon fiber.

The average particle diameter of the carbon material is preferably from 0.1 μm to 60 μm, more preferably from

0.3 μm to 45 μm, and still more preferably from 0.5 μm to 30 μm.

The BET specific surface area of the carbon material is preferably from 1 $m^2/g$ to 10 $m^2/g$.

From the viewpoint of further improving the discharge capacity of a lithium ion secondary battery, among the carbon materials, graphite having a carbon hexagonal plane spacing ($d_{002}$) of from 3.35 Å to 3.40 Å and a crystallite (Lc) in the c-axis direction of 100 Å or more in X-ray wide-angle diffraction method is particularly preferable.

From the viewpoint of further improving the cycle characteristics and safety, among the carbon materials, amorphous carbon in which the spacing ($d_{002}$) of carbon hexagonal planes in the X-ray wide-angle diffraction method is from 3.50 Å to 3.95 Å is particularly preferable.

In the disclosure, the average particle diameter is a value (median diameter (D50)) when a sample is dispersed in purified water containing a surfactant and the integration from the small diameter side is 50% in the volume-based particle size distribution measured by a laser diffraction particle size distribution analyzer (for example, SALD-3000J manufactured by Shimadzu Corporation).

The BET specific surface area can be measured, for example, from the nitrogen adsorption capacity according to JIS Z 8830: 2013. As an evaluation device, for example, AUTOSORB-1 (trade name) manufactured by QUANTACHROME corporation can be used. Since water adsorbed in the sample surface and structure is considered to affect the gas adsorption capacity, it is preferable to first carry out a pretreatment of water removal by heating when measuring the BET specific surface area.

In the pretreatment, a measurement cell loaded with 0.05 g of a measurement sample is depressurized to 10 Pa or less by a vacuum pump and then heated at 110°C and held for 3 hours or more, and then naturally cooled to normal temperature (25°C) while maintaining the depressurized state. After this pretreatment, measurement is carried out at an evaluation temperature of 77 K and the evaluation pressure range is less than 1 at relative pressure (equilibrium pressure with respect to saturated vapor pressure).

An interplanar spacing $d_{002}$ which is a 002 plane of a carbon material can be calculated using Bragg's equation from the diffraction peak corresponding to the 002 plane of a carbon, appearing around a diffraction angle 2θ of from 24° to 26°, in the diffraction profile obtained by irradiation of a sample with an X-ray (CuKα ray) and measurement of a diffraction line with a goniometer.

As a negative electrode current collector used for a negative electrode for an energy device, those commonly used in the field of energy devices can be used. Specific examples thereof include a sheet and foil including stainless steel, nickel, copper, or the like. The average thickness of the sheet and the foil is not particularly limited, and is preferably, for example, from 1 μm to 500 μm, more preferably from 2 μm to 100 μm, and still more preferably from 5 μm to 50 μm.

In the negative electrode for an energy device, a conductive material may be used from the viewpoint of reducing the resistance of the electrode. As the conductive material, those commonly used in the field of energy devices can be used. Specific examples thereof include carbon black, graphite, carbon fiber, and metal fiber. Examples of carbon black include acetylene black, ketjen black, channel black, furnace black, lamp black, and thermal black. Examples of the graphite include natural graphite and artificial graphite. Conductive materials may be used singly, or in combination of two or more kinds thereof.

As the binder resin used for the negative electrode for an energy device, those commonly used in the field of energy devices can be used. Specific examples thereof include polytetrafluoroethylene, polyvinylidene fluoride, styrene butadiene rubber, and acrylic rubber. Among these binder resins, styrene butadiene rubber and acrylic rubber are particularly preferable from the viewpoint of being able to further improve the characteristics of a lithium ion secondary battery.

The negative electrode for an energy device can be produced without particular limitation utilizing a known method of producing an electrode. An electrode can be produced, for example, by applying a slurry (negative electrode slurry) containing a negative electrode active material, a binder resin, and a conductive material and a solvent used if necessary on at least one surface of a negative electrode current collector, then removing the solvent by drying and rolling if necessary, and forming a negative electrode mixture layer on the surface of the negative electrode current collector.

The solvent used for the negative electrode slurry is not particularly limited, and may be any solvent as long as the solvent is a solvent capable of uniformly dissolving or dispersing a binder resin. When using a styrene butadiene rubber for a binder resin, water widely used as a dispersion medium of a binder resin is preferable. Such solvents may be used singly, or in combination of two or more kinds thereof.

A thickener can be added to a negative electrode slurry for producing a negative electrode mixture layer in order to improve the dispersion stability and the coatability of the negative electrode slurry. Examples of the thickener include a carboxymethylcellulose derivative such as carboxymethylcellulose or carboxymethylcellulose sodium, polyvinyl alcohol, polyvinyl pyrrolidone, a water soluble alginic acid derivative, gelatin, carrageenan, glucomannan, pectin, curdlan, gellan gum, a polyacrylic acid derivative such as polyacrylic acid, or an alkali metal salt thereof, ethylene-(meth)acrylic acid copolymer, a polyvinyl alcohol-based copolymer such as polyvinyl alcohol, and ethylene-vinyl alcohol copolymer. Among these, a carboxymethylcellulose derivative is preferable.

Application of a negative electrode slurry can be performed, for example, using a comma coater or the like. The application is suitably performed in such a manner that the ratio of the positive electrode capacity to the negative electrode capacity (negative electrode capacity/positive electrode capacity) is 1 or more at the opposing electrodes. The application amount of the negative electrode slurry is, for example, as the dry mass of the negative electrode mixture layer, preferably from 5 $g/m^2$ to 300 $g/m^2$, more preferably from 25 $g/m^2$ to 200 $g/m^2$, and still more preferably from 50 $g/m^2$ to 150 $g/m^2$. The larger the amount of application, the easier it is to obtain a lithium ion secondary battery with a large capacity, and the smaller the coating amount, the easier it is to obtain a lithium ion secondary battery with high output.
The removal of the solvent is carried out, for example, by drying preferably at from 50°C to 150°C, more preferably from 80°C to 120°C, preferably from 1 minute to 20 minutes, more preferably from 3 minutes to 10 minutes.
The rolling is performed, for example, using a roll press. The bulk density of the negative electrode mixture layer is, for example, preferably from 1 $g/cm^3$ to 2 $g/cm^3$, more preferably from 1.2 $g/cm^3$ to 1.8 $g/cm^3$, and still more preferably from 1.4 $g/cm^3$ to 1.6 $g/cm^3$. Furthermore, for removal of residual solvent and adsorbed water or the like in the negative electrode, vacuum drying may be performed at from 100°C to 150°C for from 1 hour to 20 hours.

-Separator-

A separator is not particularly limited as long as the separator has ion permeability while electrically insulating between a positive electrode and a negative electrode, and has resistance to oxidation on the positive electrode side and reducibility on the negative electrode side. A resin, an inorganic substance, or the like is used as a material of the separator which satisfies such characteristics.
As the above-described resin, an olefin polymer, a fluorine polymer, a cellulose polymer, a polyimide, nylon, or the like is used. Specifically, it is preferable to choose from materials which are stable to an electrolytic solution and excellent in liquid retention, and it is preferable to use a porous sheet, non-woven fabric, or the like, which is made of polyolefin such as polyethylene or polypropylene.
As the inorganic substance, an oxide such as alumina or silicon dioxide, a nitride such as aluminum nitride or silicon nitride, a sulfate such as barium sulfate or calcium sulfate, glass, or the like is used. For example, as a separator, one in which the above-described inorganic substance in the form of fibers or particles is attached to a thin film-shaped substrate such as a nonwoven fabric, a woven fabric, or a microporous film can be used.
As the thin film-shaped substrate, one having an average pore diameter of from 0.01 μm to 1 μm and an average thickness of from 5 μm to 50 μm is suitably used. As a separator, a composite porous layer made of the above-described inorganic material in the form of fibers or particles using a binder such as a resin can be used. Furthermore, this composite porous layer formed on the surface of a positive electrode or a negative electrode may be used as a separator. Alternatively, this composite porous layer may be formed on the surface of another separator to form a multilayer separator. For example, one obtained by forming a composite porous layer in which alumina particles having a 90% diameter (D90) of less than 1 μm are bound using a fluorocarbon resin as a binder on the surface of a positive electrode may be used as a separator.

- Electrolytic Solution -

For example, the electrolytic solution is not particularly limited as long as a lithium ion secondary battery, which is an energy device, performs its function by the electrolytic solution. As the electrolytic solution, an electrolytic solution (non-aqueous electrolytic solution) containing a solvent other than water is preferably used. Specific examples of the non-aqueous electrolytic solution include a solution of an electrolyte such as $LiClO_4$, $LiBF_4$, LiI, $LiPF_6$, $LiCF_3SO_3$, $LiCF_3CO_2$, $LiAsF_6$, $LiSbF_6$, $LIAlCl_4$, LiCl, LiBr, $LiB(C_2H_5)_4$, $LiCH_3SO_3$, $LiC_4F_9SO_3$, $Li(CF_3SO_2)_2N$, or $Li[(CO_2)_2]_2B$ dissolved in an organic solvent such as: a carbonate such as propylene carbonate, ethylene carbonate, butylene carbonate, dimethyl carbonate, diethyl carbonate, or methyl ethyl carbonate; a lactone such as γ-butyrolactone; an ether such as trimethoxymethane, 1,2-dimethoxyethane, diethyl ether, 2-ethoxyethane, tetrahydrofuran, or 2-methyltetrahydrofuran; a sulfoxide such as dimethyl sulfoxide; an oxolane such as 1,3-dioxolane or 4-methyl-1,3-dioxolane; a nitrogen-containing compound such as acetonitrile, nitromethane, or *N*-methyl-2-pyrrolidone; an ester such as methyl formate, methyl acetate, butyl acetate, methyl propionate, ethyl propionate, or phosphoric acid triester; a glyme such as diglyme, triglyme, or tetraglyme; a ketone such as acetone, diethyl ketone, methyl ethyl ketone, or methyl isobutyl ketone; a sulfone such as sulfolane; an oxazolidinone such as 3-methyl-2-oxazolidinone; or a sultone such as 1,3-propane sultone, 4-butane sultone, or naphtha sultone. Among these, an electrolytic solution in which $LiPF_6$ is dissolved in a carbonate is preferable.
An electrolytic solution is prepared, for example, by using organic solvents and electrolytes each singly or in combination of two or more kinds thereof.
From the viewpoint of further improving the characteristics of a lithium ion secondary battery, vinylene carbonate (VC) is preferably contained in an electrolytic solution.
The content of vinylene carbonate (VC) in the case of containing VC is preferably from 0.1% by mass to 2%

by mass, and more preferably 0.2% by mass to 1.5% by mass with respect to the total amount of an electrolytic solution.

There is no restriction in particular about a production method of a lithium ion secondary battery, and a known method can be utilized.

For example, first, two electrodes of a positive electrode and a negative electrode are wound via a separator made of a polyethylene microporous membrane. The obtained spiral wound group is inserted into a battery can, and a tab terminal previously welded to a current collector of a negative electrode is welded to the bottom of the battery can. An electrolytic solution is injected into the obtained battery can. Further, a tab terminal previously welded to a positive electrode current collector is welded to a lid of the battery, the lid is disposed on the top of the battery can via an insulating gasket, and a portion where the lid and the battery can are in contact is crimped and sealed, and a lithium ion secondary battery is obtained. Examples

Hereinafter, the invention will be described in more detail by way of experimental examples, but the invention is not limited thereto.

< Preparation of Resin (Resin 1) Containing Structural Unit Derived from Nitrile Group-containing Monomer >

After 397.2 g of purified water (manufactured by Wako Pure Chemical Industries, Ltd.) was added into 0.5-liter separable flask equipped with a stirrer, a thermometer, and a condenser, nitrogen replacement was performed in the system, and the temperature was raised to 72.0°C. After confirming that the water temperature in the system was 72.0°C, a solution of 347.0 mg of ammonium persulfate (manufactured by Wako Pure Chemical Industries, Ltd.) as a polymerization initiator dissolved in 2.5 g of purified water was added into the system, and then, the mixture was stirred at 250 revolutions/minute. Next, monomers (41.4 g (0.78 moles) of acrylonitrile (manufactured by Wako Pure Chemical Industries, Ltd.) which was a nitrile group-containing monomer and 1.4 g (0.006 moles) of methoxytriethylene glycol acrylate (manufactured by Shin-Nakamura Chemical Co., Ltd., NK ESTER AM-30G)) were added dropwise into the system over 2 hours and the mixture was allowed to react for 1 hour. Next, a solution prepared by dissolving 420 mg of ammonium persulfate (manufactured by Wako Pure Chemical Industries, Ltd.) as a polymerization initiator in 7.8 g of purified water was added into the system, and then the mixture was allowed to react for 1 hour. Next, the temperature in the system was raised to 92.0°C, and the mixture was allowed to react for 1 hour. Next, a solution prepared by dissolving 210 mg of ammonium persulfate (manufactured by Wako Pure Chemical Industries, Ltd.) as a polymerization initiator in 1.5 g of purified water was added into the system, and then the mixture was allowed to react for 1 hour. During the above step, the system was maintained under a nitrogen atmosphere and stirring was continued at 250 revolutions/minute. After cooling to room temperature (25°C), the reaction liquid was suction filtered and the precipitated resin was separated by filtration. The filtered resin was washed with 1,000 g of purified water (manufactured by Wako Pure Chemical Industries, Ltd.). The washed resin was dried with a vacuum dryer set at 60°C and 150 Pa for 24 hours, and a resin (Resin 1) containing a structural unit derived from a nitrile group-containing monomer was obtained. Hereinafter, a resin containing a structural unit derived from a nitrile group-containing monomer is described as "PAN resin". After 423 g of NMP was added into a 0.5-liter separable flask equipped with a stirrer, a thermometer, and a condenser and the temperature was raised to 100±5°C, 27 g of powder of a PAN resin (Resin 1) was added, and the mixture was stirred at 300 revolutions/minute for 5 hours, and an NMP solution of a PAN resin (Resin 1) was obtained.

< Preparation of Resin (Resin 2) Containing Structural Unit Derived from Nitrile Group-containing Monomer >

A resin (Resin 2) containing a structural unit derived from a nitrile group-containing monomer and an NMP solution thereof were obtained in the same manner as "Preparation of Resin (Resin 1) Containing Structural Unit Derived from Nitrile Group-containing Monomer" except that methoxytriethylene glycol acrylate was changed to 1.4 g (0.011 moles) of 2-methoxyethyl acrylate.

< Preparation of Resin (Resin 3) Containing Structural Unit Derived from Nitrile Group-containing Monomer >

A resin (Resin 3) containing a structural unit derived from a nitrile group-containing monomer and an NMP solution thereof were obtained in the same manner as "Preparation of Resin (Resin 1) Containing Structural Unit Derived from Nitrile Group-containing Monomer" except that methoxytriethylene glycol acrylate was changed to 1.4 g (0.003 moles) of methoxy poly(n=9)ethylene glycol acrylate (manufactured by Shin-Nakamura Chemical Co., Ltd., trade name: NK ESTER AM-90G).

< Preparation of Positive Electrode Active Material >

(1) Preparation of Positive Electrode Active Material A

After suspending 1,390 g of lithium carbonate in pure water, a metal salt solution was added at 1.6 L/hour. A metal salt solution was prepared using hydrates of nitrates of nickel, cobalt, and aluminum. The ratio of nickel, cobalt, and aluminum contained in the metal salt solution was adjusted to a composition ratio of Ni: Co: Al = 80% by mole: 15% by mole: 5% by mole in such a manner that the compound obtained as the positive electrode active material A was $LiNi_{0.8}Co_{0.15}Al_{0.05}O_2$.

By this treatment, fine particle lithium-containing carbonate was precipitated in the solution. The precipitate was washed twice with saturated lithium carbonate solution and filtered off using a filter press. Subsequently, the precipitate was dried, and a lithium-containing carbonate which is a precursor of a positive electrode active material was obtained.

Next, the obtained lithium-containing carbonate was placed in a calcining furnace, heated to 850°C for 6 hours, and heated and held for 2 hours, then cooled, and an oxide is obtained. The obtained oxide was crushed, and a positive electrode active material A was obtained. Hereinafter, the positive electrode active material A is referred to as NCA.

(2) Preparation of Positive Electrode Active Material B

A metal salt solution was prepared using hydrates of nitrates of nickel, cobalt, and manganese. A positive electrode active material B was obtained in the same method as the positive electrode active material A except that the ratio of nickel, cobalt, and manganese contained in the metal salt solution was adjusted to a composition ratio of Ni: Co: Mn = 80% by mole: 10% by mole: 10% by mole in such a manner that the compound obtained as the positive electrode active material B was $LiNi_{0.8}Co_{0.1}Mn_{0.1}O_2$. Hereinafter, the positive electrode active material B is referred to as NMC (811).

(3) Preparation of Positive Electrode Active Material C

100 g of the obtained NMC (811) and 1,000 ml of pure water were put in a beaker, stirred for 30 minutes, then filtered, and a solid was obtained. The obtained solid was washed twice in the same manner, and the solid content was dried at 200°C for 12 hours, and a positive electrode active material C was obtained. Hereinafter, the positive electrode active material C is referred to as NMC (811) W.

(4) Preparation of Positive Electrode Active Material D

100 g of the obtained NCA and 1,000 ml of pure water were put in a beaker, stirred for 30 minutes, then filtered, and a solid was obtained. The obtained solid was washed twice in the same manner, and the solid content was dried at 200°C for 12 hours, and a positive electrode active material D was obtained. Hereinafter, the positive electrode active material D is referred to as NCA (W).

< Preparation of Positive Electrode Slurry >

(Example 1)

NCA (positive electrode active material), acetylene black (conductive material, manufactured by Denka Co., Ltd., DENKA BLACK HS-100), PAN resin (Resin 1) (a resin containing a structural unit derived from a nitrile group-containing monomer), and PVDF (fluorocarbon resin) were mixed in such a manner that the ratio of solid content was 98.0% by mass : 1.0% by mass: 0.8% by mass: 0.2% by mass, and NMP was further added for viscosity adjustment, and a positive electrode slurry was prepared. NMP was added in an amount such that the viscosity of a slurry measured using an E-type viscometer (manufactured by TOKI SANGYO CO., LTD., TV-35) at 25°C and 0.5 revolutions/minute was from 2,000 mPa·s to 5,000 mPa·s.

The room temperature and humidity when producing the positive electrode slurry were 55±1% RH and 25±1°C.

(Example 2)

A positive electrode slurry was produced in the same manner as in Example 1 except that the solid content ratio of NCA, acetylene black, PAN resin, and PVDF was 98.0% by mass: 1.0% by mass: 0.7% by mass: 0.3% by mass.

(Example 3)

A positive electrode slurry was produced in the same manner as in Example 1 except that the solid content ratio of NCA, acetylene black, PAN resin, and PVDF was 98.0% by mass: 1.0% by mass: 0.6% by mass: 0.4% by mass.

(Example 4)

A positive electrode slurry was produced in the same manner as in Example 1 except that the solid content ratio of NCA, acetylene black, PAN resin, and PVDF was 98.0% by mass: 1.0% by mass: 0.5% by mass: 0.5% by mass.

(Example 5)

A positive electrode slurry was produced in the same manner as in Example 1 except that the positive electrode active material was changed to NMC (811).

(Example 6)

A positive electrode slurry was produced in the same manner as in Example 2 except that the positive electrode active material was changed to NMC (811).

(Example 7)

A positive electrode slurry was produced in the same manner as in Example 3 except that the positive electrode active material was changed to NMC (811).

(Example 8)

A positive electrode slurry was produced in the same manner as in Example 4 except that the positive electrode active material was changed to NMC (811).

(Examples 9 to 16)

A positive electrode slurry was produced in the same manner as in Examples 1 to 8 except that the PAN resin (Resin 2) was used in place of the PAN resin (Resin 1).

(Examples 17 to 24)

A positive electrode slurry was produced in the same manner as in Examples 1 to 8 except that the PAN resin (Resin 3) was used in place of the PAN resin (Resin 1).

(Example 25)

NMC (811) W (positive electrode active material), acetylene black (conductive material, manufactured by Denka Co., Ltd., DENKA BLACK HS-100), PAN resin (Resin 1) (a resin containing a structural unit derived from a nitrile group-containing monomer), and PVDF (fluorocarbon resin) were mixed in such a manner that the ratio of solid content was 98.0% by mass: 1.0% by mass: 0.15% by mass: 0.85% by mass, and NMP was further added for viscosity adjustment, and a positive electrode slurry was prepared. NMP was added in an amount such that the viscosity of a slurry measured using an E-type viscometer (manufactured by TOKI SANGYO CO., LTD., TV-35) at 25°C and 0.5 revolutions/minute was from 2,000 mPa·s to 5,000 mPa·s.

The room temperature and humidity when producing the positive electrode slurry were 55±1% RH and 25±1°C.

(Example 26)

A positive electrode slurry was produced in the same manner as in Example 25 except that the positive electrode active material was changed to NCA (W).

(Comparative Example 1)

A positive electrode slurry was produced in the same manner as in Example 1 except that the solid content ratio of NCA, acetylene black, PAN resin (Resin 1), and PVDF was 98.0% by mass: 1.0% by mass: 1.0% by mass: 0% by mass.

(Comparative Example 2)

A positive electrode slurry was produced in the same manner as in Example 1 except that the solid content ratio of NCA, acetylene black, PAN resin (Resin 1), and PVDF was 98.0% by mass: 1.0% by mass: 0% by mass: 1.0% by mass.

(Comparative Example 3)

A positive electrode slurry was produced in the same manner as in Comparative Example 1 except that the positive electrode active material was changed to NMC (811).

(Comparative Example 4)

A positive electrode slurry was produced in the same manner as in Comparative Example 2 except that the positive electrode active material was changed to NMC (811).

< Evaluation of Positive Electrode Slurry >

(1) Gelation of Positive Electrode Slurry

Whether the prepared positive electrode slurry was gelled or not was determined by the viscosity of the positive electrode slurry and the possibility of dilution. The viscosity of the prepared positive electrode slurry was measured using an E-type viscometer (TV-35, manufactured by TOKI SANGYO CO., LTD.) under the conditions of 25°C and 0.5 revolutions/minute. When the viscosity was higher than 5,000 mPa·s and dilution with NMP was difficult, it was determined that the positive electrode slurry had gelled.

(2) Sedimentation of Positive Electrode Slurry

In a glass sample tube bottle (manufactured by AS ONE Corporation, 30 cc), 20 g of the prepared positive electrode slurry was placed and the bottle was sealed, and was allowed to stand still on a substantially horizontal table under an environment of 25±1 °C, and the appearance of the slurry one day after preparation was observed. A slurry separated into a supernatant and a precipitate was determined to have settled. A slurry in which sedimentation had occurred was determined to be less stable.

(3) Viscosity Stability of Positive Electrode Slurry

In a glass sample tube bottle (manufactured by AS ONE Corporation, 30 cc), 20 g of the prepared positive electrode slurry was placed and the bottle was sealed, and was allowed to stand still on a substantially horizontal table under an environment of 25±1 °C, and the viscosity one day after preparation was measured using an E-type viscometer (TV-35, manufactured by TOKI SANGYO CO., LTD.) under the conditions of 25°C and 0.5 revolutions/minute. The viscosity change rate was calculated by the following Formula, and the viscosity stability of a positive electrode slurry was evaluated based on the following criteria.

$$\text{viscosity change rate (\%)} = [(\text{viscosity after standing - viscosity before standing})/\text{viscosity after standing}] \times 100$$

A: viscosity change rate is from -20% to less than 100%
B: viscosity change rate is from -40% to less than -20% or from 100% to less than 200%
C: viscosity change rate is from -60% to less than -40% or from 200% to less than 300%
D: viscosity change rate is less than -60% or 300% or more

The obtained results are shown in Tables 1 to 8.

[Table 1]

| Example | | | 1 | 2 | 3 | 4 |
|---|---|---|---|---|---|---|
| Solid content ratio (% by mass) | Positive electrode active material | NCA | 98.0 | 98.0 | 98.0 | 98.0 |
| | | NMC (811) | 0 | 0 | 0 | 0 |
| | Conductive material | | 1.0 | 1.0 | 1.0 | 1.0 |
| | Resin | Resin 1 | 0.8 | 0.7 | 0.6 | 0.5 |
| | | PVDF | 0.2 | 0.3 | 0.4 | 0.5 |
| Gelation of positive electrode slurry | | | No | No | No | No |
| Sedimentation of positive electrode slurry | | | No | No | No | No |
| Viscosity stability of positive electrode slurry | | | B | A | A | C |

[Table 2]

| Example | | | 5 | 6 | 7 | 8 |
|---|---|---|---|---|---|---|
| Solid content ratio (% by mass) | Positive electrode active material | NCA | 0 | 0 | 0 | 0 |
| | | NMC (811) | 98.0 | 98.0 | 98.0 | 98.0 |
| | Conductive material | | 1.0 | 1.0 | 1.0 | 1.0 |
| | Resin | Resin 1 | 0.8 | 0.7 | 0.6 | 0.5 |
| | | PVDF | 0.2 | 0.3 | 0.4 | 0.5 |
| Gelation of positive electrode slurry | | | No | No | No | No |
| Sedimentation of positive electrode slurry | | | No | No | No | No |
| Viscosity stability of positive electrode slurry | | | B | A | A | C |

[Table 3]

| Example | | | 9 | 10 | 11 | 12 |
|---|---|---|---|---|---|---|
| Solid content ratio (% by mass) | Positive electrode active material | NCA | 98.0 | 98.0 | 98.0 | 98.0 |
| | | NMC (811) | 0 | 0 | 0 | 0 |
| | Conductive material | | 1.0 | 1.0 | 1.0 | 1.0 |
| | Resin | Resin 2 | 0.8 | 0.7 | 0.6 | 0.5 |
| | | PVDF | 0.2 | 0.3 | 0.4 | 0.5 |
| Gelation of positive electrode slurry | | | No | No | No | No |
| Sedimentation of positive electrode slurry | | | No | No | No | No |
| Viscosity stability of positive electrode slurry | | | B | A | A | C |

[Table 4]

| Example | | | 13 | 14 | 15 | 16 |
|---|---|---|---|---|---|---|
| Solid content ratio (% by mass) | Positive electrode active material | NCA | 0 | 0 | 0 | 0 |
| | | NMC (811) | 98.0 | 98.0 | 98.0 | 98.0 |
| | Conductive material | | 1.0 | 1.0 | 1.0 | 1.0 |
| | Resin | Resin 2 | 0.8 | 0.7 | 0.6 | 0.5 |
| | | PVDF | 0.2 | 0.3 | 0.4 | 0.5 |
| Gelation of positive electrode slurry | | | No | No | No | No |
| Sedimentation of positive electrode slurry | | | No | No | No | No |
| Viscosity stability of positive electrode slurry | | | B | A | A | C |

[Table 5]

| Example | | | 17 | 18 | 19 | 20 |
|---|---|---|---|---|---|---|
| Solid content ratio (% by mass) | Positive electrode active material | NCA | 98.0 | 98.0 | 98.0 | 98.0 |
| | | NMC (811) | 0 | 0 | 0 | 0 |
| | Conductive material | | 1.0 | 1.0 | 1.0 | 1.0 |
| | Resin | Resin 3 | 0.8 | 0.7 | 0.6 | 0.5 |
| | | PVDF | 0.2 | 0.3 | 0.4 | 0.5 |
| Gelation of positive electrode slurry | | | No | No | No | No |
| Sedimentation of positive electrode slurry | | | No | No | No | No |
| Viscosity stability of positive electrode slurry | | | B | A | A | C |

[Table 6]

| Example | | | 21 | 22 | 23 | 24 |
|---|---|---|---|---|---|---|
| Solid content ratio (% by mass) | Positive electrode active material | NCA | 0 | 0 | 0 | 0 |
| | | NMC (811) | 98.0 | 98.0 | 98.0 | 98.0 |
| | Conductive material | | 1.0 | 1.0 | 1.0 | 1.0 |
| | Resin | Resin 3 | 0.8 | 0.7 | 0.6 | 0.5 |
| | | PVDF | 0.2 | 0.3 | 0.4 | 0.5 |
| Gelation of positive electrode slurry | | | No | No | No | No |
| Sedimentation of positive electrode slurry | | | No | No | No | No |
| Viscosity stability of positive electrode slurry | | | B | A | A | C |

[Table 7]

| Example | | | 25 | 26 |
|---|---|---|---|---|
| Solid content ratio (% by mass) | Positive electrode active material | NCA(W) | 0 | 98.0 |
| | | NMC (811) W | 98.0 | 0 |
| | Conductive material | | 1.0 | 1.0 |
| | Resin | Resin 1 | 0.15 | 0.15 |
| | | PVDF | 0.85 | 0.85 |
| Gelation of positive electrode slurry | | | No | No |
| Sedimentation of positive electrode slurry | | | No | No |
| Viscosity stability of positive electrode slurry | | | A | A |

[Table 8]

| Comparative Example | | | 1 | 2 | 3 | 4 |
|---|---|---|---|---|---|---|
| Solid content ratio (% by mass) | Positive electrode active material | NCA | 98.0 | 98.0 | 0 | 0 |
| | | NMC (811) | 0 | 0 | 98.0 | 98.0 |
| | Conductive material | | 1.0 | 1.0 | 1.0 | 1.0 |
| | Resin | Resin 1 | 1.0 | 0 | 1.0 | 0 |
| | | PVDF | 0 | 1.0 | 0 | 1.0 |
| Gelation of positive electrode slurry | | | No | Yes | No | Yes |
| Sedimentation of positive electrode slurry | | | Yes | Not measurable | Yes | Not measurable |
| Viscosity stability of positive electrode slurry | | | D | Not measurable | D | Not measurable |

From the results of Examples 1 to 26 and Comparative Examples 1 to 4, when a resin containing a structural unit derived from a nitrile group-containing monomer and a fluorocarbon resin were used as the binder resin, gelation and sedimentation of the positive electrode slurry did not occur, and favorable stability was exhibited. On the other hand, when only a resin containing a structural unit derived from a nitrile group-containing monomer was used as the binder resin, gelation of the positive electrode slurry did not occur regardless of the type of the positive electrode active material, and sedimentation of the positive electrode slurry occurred. When only a fluorocarbon resin was used as the binder resin, the positive electrode slurry gelled regardless of the type of the positive electrode active material.

From the above results, according to the disclosure, it has been suggested that, in the case of using a positive electrode active material containing a specific metal oxide as a positive electrode active material, it is possible to provide a composite resin for an energy device electrode capable of suppressing gelation and sedimentation of a positive electrode slurry.

The disclosure of International Application No. PCT/JP2017/007558 filed on February 27, 2017, is hereby incorporated by reference in its entirety.

All the documents, patent applications and technical standards that are described in the present specification are hereby incorporated by reference to the same extent as if each individual document, patent application or technical standard is concretely and individually described to be incorporated by reference.

## Claims

1. A composite resin for an energy device electrode, the composite resin comprising: a resin comprising a structural unit derived from a nitrile group-containing monomer; and a fluorocarbon resin.

2. The composite resin for an energy device electrode according to claim 1, which is used for forming a positive electrode mixture layer comprising a positive electrode active material comprising a lithium-containing metal composite oxide comprising lithium and nickel and having a ratio of nickel to metal, excluding lithium, of 50% by mole or more.

3. The composite resin for an energy device electrode according to claim 2, wherein the lithium-containing metal composite oxide comprises a compound represented by the following Formula (I):

$$Li_aNi_bCo_cM_dO_{2+e} \qquad \text{Formula (I)}$$

wherein, in Formula (I), M is at least one selected from the group consisting of Al, Mn, Mg and Ca, a, b, c, d, and e satisfy $0.2 \leq a \leq 1.2$, $0.5 \leq b \leq 0.9$, $0.05 \leq c \leq 0.4$, $0 \leq d \leq 0.2$, and $-0.2 \leq e \leq 0.2$, respectively, and $b + c + d = 1$.

4. The composite resin for an energy device electrode according to any one of claims 1 to 3, wherein the resin comprising a structural unit derived from a nitrile group-containing monomer further comprises a structural unit derived from a monomer represented by the following Formula (II):

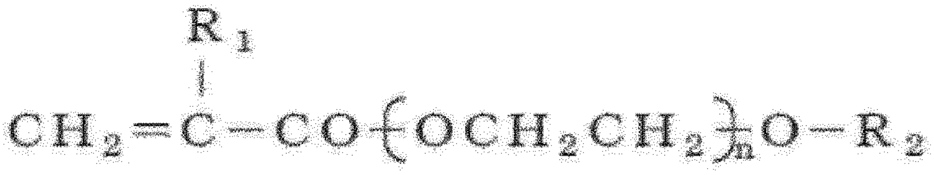
Formula (II)

wherein, in Formula (II), $R_1$ represents a hydrogen atom or a methyl group, $R_2$ represents a hydrogen atom or a monovalent hydrocarbon group, and n represents an integer from 1 to 50.

5. The composite resin for an energy device electrode according to claim 4, wherein a ratio of the structural unit derived from a monomer represented by Formula (II) with respect to 1 mole of the structural unit derived from a nitrile group-containing monomer in the resin comprising a structural unit derived from a nitrile group-containing monomer is from 0.001 moles to 0.2 moles.

6. The composite resin for an energy device electrode according to any one of claims 1 to 5, wherein the resin comprising the structural unit derived from a nitrile group-containing monomer further comprises a structural unit derived from a monomer represented by the following Formula (III):

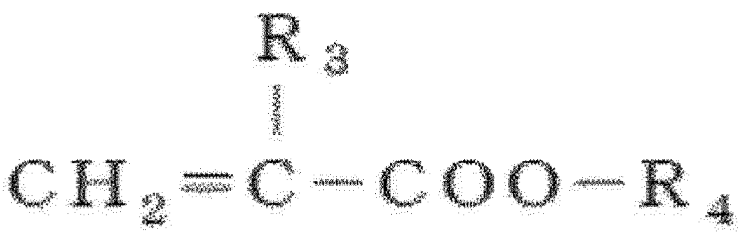
Formula (III)

wherein, in Formula (III), $R_3$ represents a hydrogen atom or a methyl group, and $R_4$ represents an alkyl group having from 4 to 30 carbon atoms.

7. The composite resin for an energy device electrode according to claim 6, wherein a ratio of the structural unit derived from a monomer represented by Formula (III) with respect to 1 mole of the structural unit derived from a nitrile group-containing monomer in the resin comprising a structural unit derived from a nitrile group-containing monomer is from 0.001 moles to 0.2 moles.

8. The composite resin for an energy device electrode according to any one of claims 1 to 7, wherein the nitrile group-containing monomer comprises acrylonitrile.

9. The composite resin for an energy device electrode according to any one of claims 1 to 8, wherein the fluorocarbon resin comprises polyvinylidene fluoride (PVDF).

**10.** A composition for forming an energy device electrode, the composition comprising: a positive electrode active material comprising a lithium-containing metal composite oxide comprising lithium and nickel and having a ratio of nickel to metal, excluding lithium, of 50% by mole or more; and the composite resin for an energy device electrode according to any one of claims 1 to 9.

**11.** The composition for forming an energy device electrode according to claim 10, wherein the lithium-containing metal composite oxide comprises a compound represented by the following Formula (I):

$$Li_aNi_bCo_cM_dO_{2+e} \qquad \text{Formula (I)}$$

wherein, in Formula (I), M is at least one selected from the group consisting of Al, Mn, Mg and Ca, a, b, c, d, and e satisfy $0.2 \leq a \leq 1.2$, $0.5 \leq b \leq 0.9$, $0.05 \leq c \leq 0.4$, $0 \leq d \leq 0.2$, and $-0.2 \leq e \leq 0.2$, respectively, and $b + c + d = 1$.

**12.** A positive electrode for an energy device, the positive electrode comprising:

a positive electrode current collector; and
a positive electrode mixture layer provided on at least one surface of the positive electrode current collector and comprising the composition for forming an energy device electrode according to claim 10 or 11.

**13.** An energy device comprising the positive electrode for an energy device according to claim 12.

**14.** The energy device according to claim 13, wherein the energy device is a lithium ion secondary battery.

## INTERNATIONAL SEARCH REPORT

International application No.
PCT/JP2018/007323

A. CLASSIFICATION OF SUBJECT MATTER
Int. Cl. H01M4/62(2006.01)i, H01M4/13(2010.01)i, H01M4/139(2010.01)i, H01M4/525(2010.01)i

According to International Patent Classification (IPC) or to both national classification and IPC

B. FIELDS SEARCHED

Minimum documentation searched (classification system followed by classification symbols)
Int. Cl. H01M4/62, H01M4/13, H01M4/139, H01M4/525

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-251280 A (SANYO ELECTRIC CO., LTD.) 04 November 2010, claims, examples & US 2010/0239910 A1, claims, examples & CN 101847740 A & KR 10-2010-0106242 A | 1-3, 8-14 |
| X | JP 2009-117159 A (SONY CORP.) 28 May 2009, claims, examples & US 2009/0117465 A1, claims, examples & CN 101431151 A & KR 10-2009-0046700 A | 1-9 |
| A | JP 2012-028225 A (HITACHI VEHICLE ENERGY, LTD.) 09 February 2012, claims, examples (Family: none) | 1-14 |
| A | JP 2008-293719 A (SONY CORP.) 04 December 2008, claims, examples & US 2008/0292969 A1, claims, examples & CN 101312257 A | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18.05.2018 | 29.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/007323

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/114651 A1 (TOYOTA INDUSTRIES CORP.) 30 August 2012, claims, examples (Family: none) | 1-14 |
| A | WO 2014/142281 A1 (NISSAN MOTOR CO., LTD.) 18 September 2014, claims, examples (Family: none) | 1-14 |
| A | WO 2006/033173 A1 (HITACHI CHEMICAL CO., LTD.) 30 March 2006, claims, examples & US 2008/0003506 A1, claims, examples & CN 101023543 A & KR 10-2007-0041785 A & TW 200610785 A | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008235147 A
- JP 4951823 B
- JP 2017007558 W


### Non-patent literature cited in the description


- Various analyses of electrode binder. *The TRC News,* September 2013